# FASCICULE DE BREVET EUROPEEN

(11) **EP 3 520 564 B1**
(45) Date de publication et mention de la délivrance du brevet: **02.11.2022**
(21) Numéro de dépôt: 17784360.4
(22) Date de dépôt: 21.09.2017
(51) Int. Cl.: H04W 4/80, H04W 48/18, H04W 76/14, H04W 88/06, H04W 4/021, H04W 48/12

(54) **ACTIVATION PERFECTIONNÉE D'INTERFACES DE COMMUNICATION D'UN TERMINAL**
VERBESSERTE AKTIVIERUNG VON KOMMUNIKATIONSSCHNITTSTELLEN EINES ENDGERÄTS
IMPROVED ACTIVATION OF COMMUNICATION INTERFACES OF A TERMINAL

(30) Priorité: 27.09.2016 FR 1659144
(43) Date de publication de la demande: 07.08.2019
(73) Titulaire: Orange, 92130 Issy-les-Moulineaux (FR)
(72) Inventeur: PERRUFEL, Micheline, 92326 Châtillon cedex (FR); LEROUX, Sylvain, 92326 Châtillon cedex (FR); CUTULLIC, Christophe, 92326 Châtillon cedex (FR)
(86) Numéro de dépôt international: PCT/FR2017/052533
(87) Numéro de publication internationale: WO 2018/060571

(56) Documents cités:
- WO-A2-03/105418
- US-A1- 2003 228 892
- US-A1- 2009 086 864
- US-A1- 2016 278 006

## Description

La présente invention concerne un traitement de données opéré par un terminal, pour une communication via une pluralité d'interfaces du terminal.

US 2016/0278006 A1 divulgue un procédé pour recevoir et émettre des données dans un système de communication radiofréquence.

En particulier, le terminal comporte au moins :
- une première interface de communication, par une liaison radiofréquence, et
- une deuxième interface de communication, par une liaison de courte portée.

Il s'avère que l'activation de la première interface perturbe le fonctionnement correct de la deuxième interface.

La présente invention vient améliorer la situation.

Elle propose à cet effet un procédé de commande d'un dispositif comprenant une première interface de communication par liaison radiofréquence selon une première technologie d'accès radio, et une deuxième interface de communication par liaison radiofréquence selon une deuxième technologie d'accès radio, le procédé comprenant :
- activer la première interface de communication pour communiquer selon la première technologie d'accès radio,
- recevoir sur la première interface de communication un signal d'information d'une balise radiofréquence,
- désactiver la première interface de communication sur réception du signal d'information, et
- activer la deuxième interface de communication pour communiquer selon la deuxième technologie d'accès radio.

Grâce à cette disposition, la communication via la deuxième interface n'est pas polluée par une éventuelle rémanence de communication selon la première technologie radio.

A titre d'exemple, le dispositif précité peut être par exemple un terminal comportant les première et deuxième interfaces, tel qu'un smartphone, une tablette, etc., comportant typiquement plusieurs interfaces de communication (par exemple Bluetooth, NFC ou RFID, Wifi, Li-Fi, et/ou autres). En particulier, il est proposé un procédé de commande d'un tel dispositif et plus particulièrement d'interfaces de communication d'un tel dispositif pour éviter qu'une communication selon la première technologie radio, en se poursuivant de manière non contrôlée, pollue la communication selon la deuxième technologie radio. La communication du dispositif via la première interface peut s'effectuer par exemple avec un premier point d'accès selon une première technologie radio et la communication via la deuxième interface peut s'effectuer avec un autre point d'accès selon une deuxième technologie radio, différente de la première technologie. Ainsi, au moins après avoir reçu le signal d'information précité via la première interface (ce signal d'information étant diffusé par le premier point d'accès par exemple), la première interface de communication est désactivée pour amorcer une communication selon l'autre technologie radio. Par exemple, le terminal peut recevoir un signal selon la première technologie (Bluetooth par exemple) et préférer désactiver la première interface correspondante (par exemple selon une préférence d'utilisateur préprogrammée) pour activer plutôt une communication via la deuxième interface (par exemple en champ proche), si l'utilisateur ne s'apprête pas à utiliser particulièrement la première technologie par exemple.

Dans une réalisation, le procédé comporte :
appliquer une temporisation entre la désactivation de la première interface et l'activation de la deuxième interface.

Néanmoins, parallèlement, dans le cas notamment où le terminal comporte en outre une troisième interface de communication, par exemple par une liaison optique, le procédé peut comprendre en outre :
activer :
- la première interface, puis
- la troisième interface de communication par liaison optique, après désactivation de la première interface, puis
- la deuxième interface.

Grâce à de telles dispositions, le dispositif peut profiter de la temporisation pour activer pendant cette dernière une autre interface de communication, par exemple une interface de communication optique de type Li-Fi dont le protocole de communication est réputé long à charger.

Dans un contexte d'application possible du procédé, le signal d'information précité est relatif à une présence d'au moins une balise radiofréquence capable d'entrer en communication avec le dispositif.

Dans une réalisation, le signal d'information précité comprend en particulier un identifiant de balise radiofréquence. Cet identifiant peut être par exemple diffusé par une ou plusieurs balises (ou « beacons » en anglais) selon la première technologie radio, dans une zone dans laquelle entre le dispositif. La réception de cet identifiant peut déclencher alors, auprès du dispositif, la désactivation de la première interface, et ultérieurement l'activation de la deuxième interface, notamment si l'identifiant de balise reçu caractérise une zone dans laquelle le dispositif est susceptible de devoir communiquer en outre selon la deuxième technologie radio. Cette zone peut être par exemple un espace d'exposition, comprenant par exemple des points d'accès selon la deuxième technologie radio pour communiquer des contenus multimédias par exemple à des utilisateurs équipés de dispositifs du type précité et offrir ainsi une interaction avec de tels utilisateurs.

Dans une telle réalisation, la première interface de communication peut alors être désactivée sur réception d'un identifiant de balise radiofréquence prédéterminé (correspondant typiquement à un identifiant pour lequel le dispositif doit être prêt pour une communication selon la seconde technologie radio).

Dans une variante, le signal d'information peut comprendre une notification de détection du dispositif dans une zone de couverture d'une ou plusieurs balises radiofréquences. Ainsi, une telle réalisation va plus loin que la simple réception d'un identifiant de balise auprès du dispositif. Dès lors que le dispositif est détecté dans la zone de couverture, une telle réalisation peut comporter la communication d'un identifiant du dispositif à l'une des balises au moins pour envoyer par exemple des contenus personnalisés à ce dispositif si l'utilisateur du dispositif (et plus particulièrement l'identifiant de son dispositif) est répertorié dans une base de données à laquelle peuvent accéder les points d'accès selon la deuxième technologie radio.

Dans une réalisation, la première technologie d'accès radio est de type Bluetooth ou Bluetooth Low Energy (BLE). Il s'est avéré que la communication selon ce protocole radio avait tendance à polluer les communications ultérieures selon d'autres types (en particulier selon la deuxième technologie précitée).

Dans une réalisation, la deuxième technologie est de type communication en champ proche, telle qu'une technologie de type Near Field Communication (ou NFC), ou une technologie de radio-identification telle qu'une technologie de type Radio Frequency Identification (ou RFID), ou encore de type communication par ultrasons.

Ainsi par exemple, la deuxième interface de communication met en œuvre une liaison radiofréquence secondaire ne nécessitant pas le lancement d'un protocole propre à cette liaison radiofréquence secondaire (comme tel est le cas au moins pour les communications radiofréquences de courte portée comme NFC ou RFID).

Dans une réalisation, la troisième interface met en œuvre une communication optique de type Light Fidelity (LiFi). Cette communication LiFi peut être unidirectionnelle (sens descendant uniquement vers le dispositif), ou bidirectionnelle.

Dans une forme de réalisation, le procédé comporte en outre :
- exécuter une première application pour l'établissement d'une communication via la première interface de communication selon un premier protocole, puis
- exécuter une deuxième application pour l'établissement d'une communication via la troisième interface de communication selon un deuxième protocole.

Une telle réalisation permet alors de charger le protocole de communication optique (qui peut être long à charger pour une communication LiFi, comme indiqué précédemment), immédiatement après l'activation de la première interface.

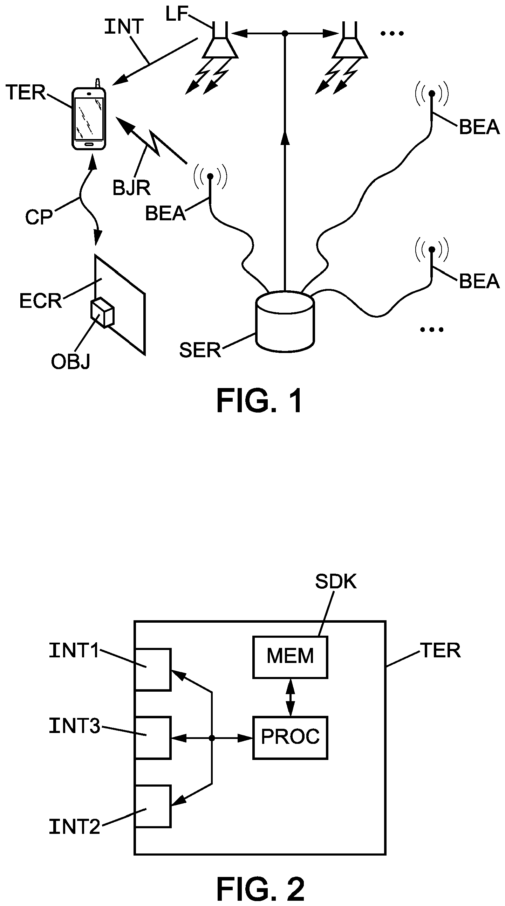

Dans une forme de réalisation, le procédé comporte en outre :
- activer la première interface de communication, auprès du dispositif, au moins pour recevoir le signal d'information précité d'une balise radiofréquence, et désactiver la première interface de communication,
- activer la troisième interface de communication pour recevoir des données d'une lampe de transmission de données par communication optique, et
- activer la deuxième interface, pour établir une interaction par liaison en champ proche selon la deuxième technologie radio entre le dispositif et au moins un objet connecté. Une telle réalisation est décrite en détails plus loin, notamment en référence à la figure 1.

La présente invention vise aussi un dispositif de communication comprenant :
- une première interface de communication par liaison radiofréquence selon une première technologie d'accès radio,
- une deuxième interface de communication par liaison radiofréquence de courte portée selon une deuxième technologie d'accès radio, et
- un processeur, couplé de manière opérationnelle aux première et deuxième interfaces de communication,
dans lequel le processeur est configuré pour la mise en œuvre du procédé de commande ci-avant.

Dans une forme de réalisation, le processeur est en particulier configuré pour exécuter un kit de développement logiciel (abréviation usuelle « SDK »), programmé pour effectuer les activations et désactivation successives des première et deuxième interfaces de communication du dispositif.

Ainsi, à l'aide d'une programmation initiale unique, le terminal est configuré pour interagir via les première et seconde interfaces de communication au moins, sans aucune perturbation, et ce pour toute sorte de contexte d'interaction.

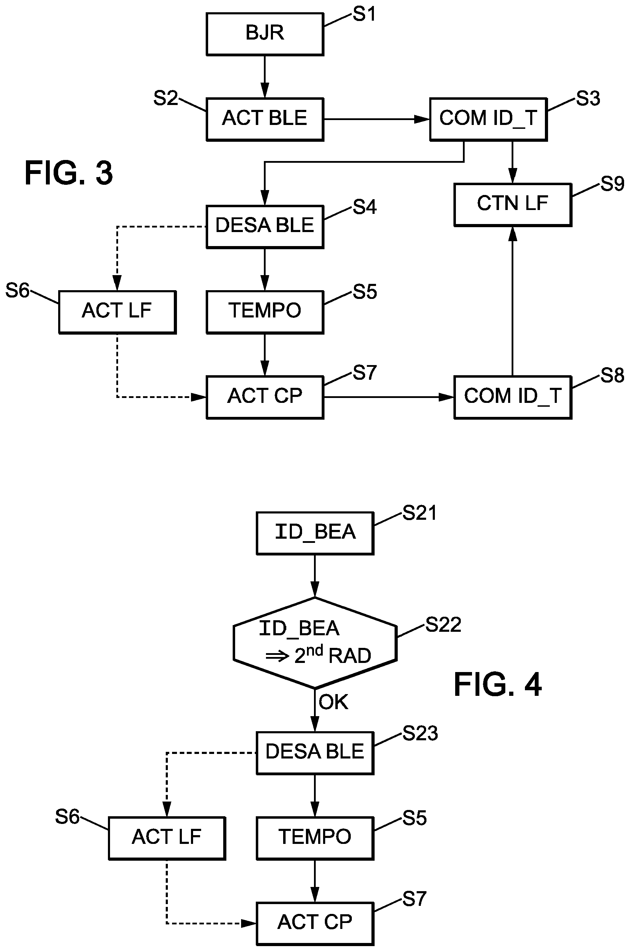

La présente invention vise aussi un programme d'ordinateur comprenant des instructions qui conduisent le dispositif de communication ci-avant à exécuter les étapes du procédé de commande ci-avant (la figure 3, ou alternativement la figure 4, illustrant des exemples d'ordinogrammes possibles d'un tel programme).

La présente invention vise aussi un système comportant au moins une balise radiofréquence et un dispositif de communication comme indiqué ci-avant.

Le système peut comporter en outre, pour la mise en œuvre du procédé de commande ci-avant, au moins :
- un serveur de contenu relié à la balise, et
- au moins une lampe reliée au serveur de contenu, configurée pour diffuser par communication optique des données de contenu issues du serveur de contenu.

En particulier, la balise est agencée pour détecter par communication radiofréquence la présence d'un dispositif de communication située dans une zone de couverture de la balise, et, à partir de cette détection, transmettre au moins une information de présence du dispositif au serveur de contenu, provoquant la transmission par communication optique par l'intermédiaire de la lampe, depuis le serveur de contenu, de données au dispositif.

Dans un mode de réalisation, le dispositif comporte en outre une troisième interface de communication par liaison optique, le dispositif étant configuré pour activer :
- la première interface, puis
- la troisième interface de communication par liaison optique, après désactivation de la première interface, puis
- la deuxième interface.

D'autres avantages et caractéristiques de l'invention apparaitront à la lecture de la description détaillée ci-après d'exemples de réalisation de l'invention, et à l'examen des dessins annexés sur lesquels :
- la figure 1 illustre un système pour la mise en œuvre de l'invention, dans un mode de réalisation particulier ;
- la figure 2 illustre schématiquement un terminal pour la mise en œuvre de l'invention ;
- la figure 3 illustre schématiquement les étapes d'un procédé selon l'invention ; et
- la figure 4 illustre schématiquement les étapes d'un procédé selon une réalisation alternative de celle illustrée sur la figure 4.

L'invention trouve une application notamment mais non exclusivement pour une communication avec une ou plusieurs balises agencées dans un endroit commun (par exemple un grand magasin, un musée, un hall d'information, etc.), les balises étant reliées par exemple à un serveur d'informations commun.

En référence à la figure 1, un terminal TER (par exemple un smartphone ou analogue) entrant dans une zone couverte par des balises (ou « beacons » en anglais) BEA, reçoit une notification de l'une de ces balises, par exemple un message de bienvenue BJR dans la zone précitée. Ce message est envoyé par liaison radiofréquence de type Bluetooth^{®} (par exemple selon le protocole Bluetooth^{®} Low Energy, ou « BLE »). Ce message peut comporter en outre une adresse du serveur SER et inviter l'utilisateur du terminal (via une interface homme/machine) à récupérer des informations du serveur SER sur des objets de la zone par exemple (typiquement du contenu informatif sur des œuvres d'un musée, ou sur des produits). La transmission de ces informations INF du serveur SER au terminal TER peut s'effectuer par connexion à une borne WiFi reliée au serveur. Dans la réalisation particulière présentée sur la figure 1, la liaison pour la réception des données d'information INF est de type optique, et plus particulièrement de type Li-Fi (pour « Light Fidelity »). Il s'agit typiquement d'une technologie de communication sans fil basée sur l'utilisation de la lumière visible que peut dispenser des lampes d'éclairage (référence LF de la figure 1) de type LED par exemple, mais à une fréquence supérieure à la persistance rétinienne, ce qui ne perturbe donc pas les utilisateurs.

Par ailleurs, afin de rendre plus attractifs pour les utilisateurs les objets OBJ exposés dans la zone, des moyens d'interaction avec l'utilisateur peuvent être prévus en outre. Il peut s'agir par exemple d'une animation sur un écran ECR qui se lance lorsque l'utilisateur s'approche de l'objet OBJ, ou plus précisément, lorsque son terminal TER est repéré à proximité de l'objet OBJ par une liaison radiofréquence de courte portée CP (en champ proche, de type NFC ou RFID). Or, il s'est avéré notamment dans ce contexte d'utilisation une incompatibilité d'utilisation entre l'usage de la liaison radiofréquence (type BLE notamment) et de la liaison radiofréquence de courte portée CP. Plus particulièrement, il a été observé que le lancement de l'application sur le terminal pour activer la liaison radiofréquence de relativement longue portée (type BLE) empêchait un fonctionnement correct de la liaison radiofréquence en champ proche, et ce alors que le lancement, seul, de l'application sur le même terminal pour la liaison radiofréquence de courte portée fonctionnait correctement.

La présente invention propose alors, en référence à la figure 2, de configurer le terminal TER, et plus particulièrement de programmer un kit de développement logiciel (SDK) du terminal, de manière à marquer une temporisation entre l'activation puis la désactivation de l'interface de communication BLE, avant d'activer l'interface de communication par courte portée CP.

Ainsi, dans la forme de réalisation de la figure 2 où le terminal TER comporte :
- une première interface de communication INT1, pour une liaison radiofréquence de relativement longue portée (par exemple Bluetooth BLE),
- une deuxième interface de communication INT2, pour une liaison de courte portée (typiquement en champ proche telle que NFC ou RFID),
- une troisième interface de communication INT3, par exemple via une liaison optique (de type Li-Fi, par exemple),
- un processeur PROC (ou tout circuit de commande d'interfaces de communication) relié auxdites interfaces INT1, INT2, INT3 pour piloter leur activation/désactivation, et
- une mémoire MEM connecté au processeur PROC et apte à stocker un logiciel pour la mise en œuvre de la présente invention, tel qu'un kit SDK,
le terminal peut marquer une temporisation entre la désactivation de la première interface INT1 et l'activation de la deuxième interface INT2, et profiter en particulier de cette temporisation pour lancer l'activation de la troisième interface INT3 pendant cette temporisation.

En effet, il a été observé en outre que les effets d'une rémanence de communication selon le protocole Bluetooth (ou plus particulièrement BLE) auprès du terminal, ne perturbent pas le lancement d'une communication optique, par exemple selon le protocole Li-Fi, alors qu'ils perturbent les communications en champ proche.

Ainsi, en référence à la figure 3, sur détection d'une balise radiofréquence à l'étape S1, le terminal active l'interface BLE à l'étape S2 pour amorcer une communication avec la balise et plus particulièrement à l'étape S3 envoyer par exemple un identifiant de terminal ID_T à l'une des balises. Comme ces premières étapes consistent à établir un contact avec une balise en particulier, le terminal est alors configuré (application SDK), dans le cas d'une communication avec une balise, pour désactiver immédiatement ensuite l'interface BLE à l'étape S4 et appliquer une temporisation S5 avant d'établir une communication S7 de type de courte portée (NFC ou RFID). Ici, le terminal (application SDK) profite avantageusement de cette temporisation pour charger le protocole Li-Fi (relativement lourd) en activant l'interface optique à l'étape S6. La (ou les) balise(s) sur le site est (sont) par ailleurs connectée(e) à un serveur de contenus SER pour transmettre l'identifiant ID_T du terminal. Ainsi, le serveur SER est capable d'envoyer un contenu adapté pour l'utilisateur du terminal en fonction de l'identifiant ID_T (par exemple un contenu ciblé pour un utilisateur abonné à un service sur le site, ou autre), et ce via un signal Li-Fi par une ou plusieurs lampes LED du site, à proximité de la balise, à l'étape S9. Ensuite, une interaction par communication de courte portée (NFC ou RFID) peut intervenir avec un objet du site OBJ à l'étape S7 sans être polluée par le protocole BLE. Là encore, l'objet OBJ peut être relié au serveur SER et un identifiant du terminal ID_T peut être communiqué à l'objet connecté à l'étape S8 pour lancer un contenu adapté à l'utilisateur du terminal (par exemple sur l'écran ECR sur site, ou directement sur un écran du terminal TER).

Dans le mode de réalisation alternatif présenté sur la figure 4, le terminal reçoit via l'interface BLE simplement un signal comportant un identifiant de balise radiofréquence ID_BEA à l'étape S21. Ainsi, le terminal peut comparer à l'étape S22 cet identifiant ID_BEA avec au moins des types d'identifiants répertoriés (par exemple dans sa mémoire MEM) pour déterminer si le type d'identifiant de balise reçu ID_BEA correspond à un site pour lequel il est préférable de désactiver l'interface BLE. Un tel site peut être typiquement une zone dans laquelle une communication selon une deuxième technologie radio (autre que Bluetooth dans l'exemple décrit) est susceptible d'intervenir ultérieurement (par exemple une communication en champ proche avec des objets connectés OBJ, dans le site). Ainsi, à l'issue de l'étape de test S22 mise en œuvre par le terminal, si le type d'identifiant reçu ID_BEA impose de désactiver l'interface BLE (flèche OK en sortie du test S22), alors l'interface BLE est désactivée immédiatement à l'étape suivante S23. Ensuite, le procédé peut se poursuivre comme décrit précédemment en référence à la figure 3, avec :
- à l'étape S5, une temporisation déclenchée avant d'activer à l'étape S7 l'interface selon la deuxième technologie radio, et
- à l'étape S6, pendant cette temporisation, le chargement du protocole LiFi pour pouvoir recevoir du contenu via les lampes LF comme décrit ci-avant en référence à la figure 1.

Il convient de noter que la communication LiFi peut être bidirectionnelle et pour des terminaux ayant une capacité de remonter du signal LiFi à un récepteur connecté au serveur SER, il est possible de transmettre un identifiant du terminal ID_T via cette liaison optique au serveur SER afin de recevoir un contenu personnalisé (de façon équivalente à l'étape S9 décrite ci-avant en référence à la figure 3).

L'invention s'applique avantageusement aux services d'interaction d'un terminal avec un environnement connecté utilisant des modes de communication de type BLE, LiFi, NFC, etc. Elle propose une solution globale évitant d'utiliser des solutions techniques individuelles et isolées, donc sous-optimales pour une interaction favorisant l'expérience client.

Lors d'un balayage d'un terminal mobile sur les différentes interfaces de communication pour détecter notamment des balises en présence, l'invention permet d'éviter les interférences entre le chargement du protocole BLE sur le terminal et les autres communications radiofréquences, notamment en champ proche (NFC ou RFID). La temporisation de l'activation du protocole BLE, suivie de sa désactivation, évite de polluer tout balayage subséquent pour une communication radiofréquence secondaire.

Dans les mises en œuvre antérieures connues, un gestionnaire de balises (par exemple un musée ou un grand magasin) est confronté à un tel problème de pollution BLE si les balises sont associées à d'autres technologies, et chaque gestionnaire doit gérer ces différentes technologies avec autant de cas d'usage différents. Dès lors qu'une application SDK correctement configurée selon le procédé de la figure 3 ou de la figure 4 est installée dans le terminal, l'application qu'exécute le terminal dans le cas d'une détection de balise est universelle pour tout service, et cette seule application reste compatible avec les différentes technologies de balises et autres moyens d'interaction.

L'invention offre une application SDK unique capable de supporter de nombreux modes de communication (LiFi, ultrason, BLE, LORA, NFC) dont en particulier BLE et communication radiofréquence de courte portée. L'invention permet aussi de gérer un parcours client supportant plusieurs technologies et messages associés. Elle s'appuie sur une constatation que l'ordre de balayage peut réduire la pollution liée au protocole BLE, si l'on applique une temporisation ou si l'on place la réception de données autres que radiofréquences (Li-Fi par exemple) entre l'application BLE et une application radiofréquence secondaire.

Bien entendu, la présente invention ne se limite pas aux formes de réalisation décrites ci-avant à titre ; elle s'étend à d'autres variantes dans l'étendue des revendications annexées.

Ainsi, par exemple, on a décrit ci-avant la diffusion Li-Fi d'un contenu adapté au terminal. Il s'agit d'un exemple de réalisation et dans une variante moins sophistiquée, un contenu ne tenant pas compte de l'identité de l'utilisateur du terminal peut être diffusé juste après la détection par une balise de présence d'un terminal entré dans le site. Une telle réalisation peut être prévue par exemple dans le mode de réalisation de la figure 4, si la communication LiFi est simplement unidirectionnelle.

## Revendications

1. Procédé de commande d'un dispositif comprenant une première interface de communication par liaison radiofréquence selon une première technologie d'accès radio, et une deuxième interface de communication par liaison radiofréquence selon une deuxième technologie d'accès radio,
le procédé comprenant :
- activer (S2) la première interface de communication pour communiquer selon la première technologie d'accès radio,
- recevoir (S3) sur la première interface de communication un signal d'information d'une balise radiofréquence,
- désactiver (S4) la première interface de communication sur réception du signal d'information, et
- activer (S7) la deuxième interface de communication pour communiquer selon la deuxième technologie d'accès radio.

2. Procédé selon la revendication 1, comprenant en outre :
appliquer une temporisation (S5) entre la désactivation de la première interface et l'activation de la deuxième interface.

3. Procédé selon l'une des revendications précédentes, dans lequel le signal d'information comprend un identifiant de balise radiofréquence.

4. Procédé selon la revendication 3, dans lequel la première interface de communication est désactivée sur réception d'un identifiant de balise radiofréquence prédéterminé.

5. Procédé selon l'une quelconque des revendications 1 et 2, dans lequel le signal d'information comprend une notification de détection du dispositif dans une zone de couverture d'une ou plusieurs balises radiofréquences.

6. Procédé selon l'une des revendications précédentes, comprenant en outre :
activer :
- la première interface, puis
- une troisième interface de communication par liaison optique (S6), après désactivation de la première interface, puis
- la deuxième interface.

7. Procédé selon l'une des revendications précédentes, dans lequel la première technologie d'accès radio est de type Bluetooth ou Bluetooth Low Energy.

8. Procédé selon l'une des revendications précédentes, dans lequel la deuxième technologie est de type communication en champ proche, telle qu'une technologie de type Near Field Communication, NFC, ou une technologie de radio-identification telle qu'une technologie de type Radio Frequency Identification, RFID, ou de type communication par ultrasons.

9. Procédé selon la revendication 6, dans lequel la troisième interface met en œuvre une communication optique de type Light Fidelity, Li Fi.

10. Procédé selon l'une quelconque des revendications 6 et 9, comprenant en outre :
- exécuter une première application pour l'établissement d'une communication via la première interface de communication selon un premier protocole, puis
- exécuter une deuxième application pour l'établissement d'une communication via la troisième interface de communication selon un deuxième protocole.

11. Procédé selon l'une des revendications 6, 9 et 10, comprenant :
- activer (S2) la première interface de communication, auprès du dispositif, au moins pour recevoir (S3) le signal d'information précité de la balise radiofréquence, et désactiver (S4) la première interface de communication,
- activer (S6) la troisième interface de communication pour recevoir des données d'une lampe de transmission de données par communication optique, et
- activer (S7) la deuxième interface, pour établir une interaction par liaison en champ proche selon la deuxième technologie radio entre le dispositif et au moins un objet connecté.

12. Dispositif de communication comprenant :
- une première interface (INT1) de communication par liaison radiofréquence selon une première technologie d'accès radio,
- une deuxième interface (INT2) de communication par liaison radiofréquence de courte portée selon une deuxième technologie d'accès radio, et
- un processeur (PROC), couplé de manière opérationnelle aux première et deuxième interfaces de communication,
dans lequel le processeur est configuré pour la mise en œuvre d'un procédé de commande selon l'une quelconque des revendications 1 à 11.

13. Dispositif de communication selon la revendication 12, dans lequel le processeur est en outre configuré pour exécuter un kit de développement logiciel, SDK, programmé pour effectuer les activations et désactivation successives des interfaces de communication du dispositif.

14. Programme d'ordinateur comprenant des instructions qui conduisent le dispositif de communication selon l'une des revendications 12 et 13 à exécuter les étapes du procédé de commande selon l'une quelconque des revendications 1 à 11.

15. Système comportant au moins une balise radiofréquence (BEA) et un dispositif de communication (TER) selon l'une des revendications 12 et 13.

16. Système selon la revendication 15, comportant en outre, pour la mise en œuvre du procédé selon la revendication 11, au moins :
- un serveur de contenu (SER) relié à la balise radiofréquence (BEA), et
- au moins une lampe (LF) reliée au serveur de contenu, configurée pour diffuser par communication optique des données de contenu issues du serveur de contenu,
dans lequel la balise (BEA) est agencée pour détecter par communication radiofréquence la présence d'un dispositif de communication située dans une zone de couverture de la balise, et, à partir de cette détection (BJR), transmettre au moins une information de présence du dispositif au serveur de contenu, provoquant la transmission par communication optique par l'intermédiaire de la lampe, depuis le serveur de contenu, de données au dispositif.

## Patentansprüche

1. Verfahren zur Steuerung einer Vorrichtung, die eine erste Schnittstelle zur Kommunikation über eine Funkfrequenzverbindung gemäß einer ersten Funkzugangstechnologie und eine zweite Schnittstelle zur Kommunikation über eine Funkfrequenzverbindung gemäß einer zweiten Funkzugangstechnologie umfasst,
wobei das Verfahren umfasst:
- Aktivieren (S2) der ersten Kommunikationsschnittstelle, um gemäß der ersten Funkzugangstechnologie zu kommunizieren,
- Empfangen (S3) eines Informationssignals eines Funkfrequenz-Beacons über die erste Kommunikationsschnittstelle,
- Deaktivieren (S4) der ersten Kommunikationsschnittstelle beim Empfangen des Informationssignals und
- Aktivieren (S2) der zweiten Kommunikationsschnittstelle, um gemäß der zweiten Funkzugangstechnologie zu kommunizieren.

2. Verfahren nach Anspruch 1, umfassend ferner:
Anwenden einer Zeitverzögerung (S5) zwischen dem Deaktivieren der ersten Schnittstelle und dem Aktivieren der zweiten Schnittstelle.

3. Verfahren nach einem der vorhergehenden Ansprüche, bei dem das Informationssignal mindestens eine Funkfrequenz-Beacon-Kennung umfasst.

4. Verfahren nach Anspruch 3, bei dem die erste Kommunikationsschnittstelle beim Empfangen einer vorbestimmten Funkfrequenz-Beacon-Kennung deaktiviert wird.

5. Verfahren nach einem der Ansprüche 1 und 2, bei dem das Informationssignal eine Benachrichtigung über die Detektion der Vorrichtung in einem Abdeckungsbereich eines oder mehrerer Funkfrequenz-Beacons umfasst.

6. Verfahren nach einem der vorhergehenden Ansprüche, umfassend ferner:
Aktivieren:
- der ersten Schnittstelle, dann
- einer dritten Kommunikationsschnittstelle über eine optische Verbindung (S6), nach dem Deaktivieren der ersten Schnittstelle, dann
- der zweiten Schnittstelle.

7. Verfahren nach einem der vorhergehenden Ansprüche, bei dem die erste Funkzugangstechnologie vom Typ Bluetooth oder Bluetooth Low Energy ist.

8. Verfahren nach einem der vorhergehenden Ansprüche, bei dem die zweite Technologie vom Typ Nahfeldkommunikation wie eine Technologie vom Typ Near Field Communication, NFC, oder eine Funkidentifikationstechnologie wie eine Technologie vom Typ Radio Frequency Identification, RFID, oder vom Typ Ultraschallkommunikation ist.

9. Verfahren nach Anspruch 6, bei dem die dritte Schnittstelle eine optische Kommunikation vom Typ Light Fidelity, Li Fi, einsetzt.

10. Verfahren nach einem der Ansprüche 6 und 9, umfassend ferner:
- Ausführen einer ersten Anwendung zum Aufbauen einer Kommunikation über die erste Kommunikationsschnittstelle gemäß einem ersten Protokoll, dann
- Ausführen einer zweiten Anwendung zum Aufbauen einer Kommunikation über die dritte Kommunikationsschnittstelle gemäß einem zweiten Protokoll.

11. Verfahren nach einem der Ansprüche 6, 9 und 10, umfassend:
- Aktivieren (S2) der ersten Kommunikationsschnittstelle, in der Nähe der Vorrichtung, mindestens zum Empfangen (S3) des vorgenannten Informationssignals des Funkfrequenz-Beacons, und Deaktivieren (S4) der ersten Kommunikationsschnittstelle,
- Aktivieren (S3) der dritten Kommunikationsschnittstelle zum Empfangen der Daten einer Datenübertragungslampe durch optische Kommunikation und
- Aktivieren (S7) der zweiten Schnittstelle zum Aufbauen einer Interaktion über eine Nahfeldverbindung gemäß der zweiten Funktechnologie zwischen der Vorrichtung und mindestens einem verbundenen Objekt.

12. Kommunikationsvorrichtung, umfassend:
- eine erste Schnittstelle (INT1) zur Kommunikation über eine Funkfrequenzverbindung gemäß einer ersten Funkzugangstechnologie,
- eine zweite Schnittstelle (INT2) zur Kommunikation über eine Funkfrequenzverbindung mit kurzer Reichweite gemäß einer zweiten Funkzugangstechnologie und
- einen Prozessor (PROC), der wirksam mit den ersten und zweiten Kommunikationsschnittstellen gekoppelt ist,
wobei der Prozessor zur Umsetzung eines Verfahrens zur Steuerung nach einem der Ansprüche 1 bis 11 ausgestaltet ist.

13. Kommunikationsvorrichtung nach Anspruch 12, wobei der Prozessor ferner dazu ausgestaltet ist, ein Software-Development-Kit, SDK, auszuführen, das dazu programmiert ist, die aufeinander folgenden Aktivierungen und Deaktivierungen der Kommunikationsschnittstelle der Vorrichtung vorzunehmen.

14. Computerprogramm, das Anweisungen umfasst, welche die Kommunikationsvorrichtung nach einem der Ansprüche 12 und 13 veranlassen, die Schritte des Steuerungsverfahrens nach einem der Ansprüche 1 bis 11 auszuführen.

15. System, das mindestens einen Funkfrequenz-Beacon (BEA) und eine Kommunikationsvorrichtung (TER) nach einem der Ansprüche 12 und 13 beinhaltet.

16. System nach Anspruch 15, beinhaltend ferner zur Umsetzung des Verfahrens nach Anspruch 11 mindestens:
- einen Inhalteserver (SER), der mit dem Funkfrequenz-Beacon (BEA) verbunden ist, und
- mindestens eine Lampe (LF), die mit dem Inhalteserver verbunden ist und dazu ausgestaltet ist, durch optische Kommunikation aus dem Inhalteserver stammende Inhaltsdaten auszusenden,
wobei der Beacon (BEA) dazu eingerichtet ist, durch Funkfrequenzkommunikation die Anwesenheit einer Kommunikationsvorrichtung zu detektieren, die in einem Abdeckungsbereich des Beacons gelegen ist, und ausgehend von dieser Detektion (BJR) mindestens eine Information zur Anwesenheit der Vorrichtung an den Inhalteserver zu senden, die die Übertragung durch optische Kommunikation mittels der Lampe, vom Inhalteserver aus, von Daten an die Vorrichtung bewirkt.

## Claims

1. Method for controlling a device comprising a first radiofrequency-link communication interface using a first radio access technology, and a second radiofrequency-link communication interface using a second radio access technology,
the method comprising:
- activating (S2) the first communication interface in order to communicate using the first radio access technology,
- receiving (S3), on the first communication interface, an information signal from a radiofrequency beacon,
- deactivating (S4) the first communication interface upon receipt of the information signal, and
- activating (S7) the second communication interface in order to communicate using the second radio access technology.

2. Method according to Claim 1, furthermore comprising: applying a delay (S5) between the deactivation of the first interface and the activation of the second interface.

3. Method according to either of the preceding claims, wherein the information signal comprises a radiofrequency beacon identifier.

4. Method according to Claim 3, wherein the first communication interface is deactivated upon receipt of a predetermined radiofrequency beacon identifier.

5. Method according to either one of Claims 1 and 2, wherein the information signal comprises a notification of detection of the device within an area of coverage of one or more radiofrequency beacons.

6. Method according to one of the preceding claims, furthermore comprising:
activating:
- the first interface, and then
- a third optical-link communication interface (S6), after deactivation of the first interface, and then
- the second interface.

7. Method according to one of the preceding claims, wherein the first radio access technology is of Bluetooth or Bluetooth Low Energy type.

8. Method according to one of the preceding claims, wherein the second technology is of near-field communication type, such as a Near Field Communication, NFC, technology or a radio identification technology, such as a technology of radiofrequency identification, RFID, type, or of ultrasonic communication type.

9. Method according to Claim 6, wherein the third interface implements Light Fidelity, Li-Fi, optical communication.

10. Method according to either one of Claims 6 and 9, furthermore comprising:
- executing a first application in order to establish communication via the first communication interface in accordance with a first protocol, and then
- executing a second application in order to establish communication via the third communication interface in accordance with a second protocol.

11. Method according to one of Claims 6, 9 and 10, comprising:
- activating (S2) the first communication interface, on the device, at least in order to receive (S3) the abovementioned information signal from the radiofrequency beacon, and deactivating (S4) the first communication interface,
- activating (S6) the third communication interface in order to receive data from a data transmission lamp through optical communication, and
- activating (S7) the second interface in order to establish a near-field link interaction using the second radio technology between the device and at least one connected object.

12. Communication device comprising:
- a first radiofrequency-link communication interface (INT1) using a first radio access technology,
- a second short-range radiofrequency-link communication interface (INT2) using a second radio access technology, and
- a processor (PROC) operationally coupled to the first and second communication interfaces,
wherein the processor is configured to implement a control method according to any one of Claims 1 to 11.

13. Communication device according to Claim 12, wherein the processor is furthermore configured to execute a software development kit, SDK, programmed to successively activate and deactivate the communication interfaces of the device.

14. Computer program comprising instructions that prompt the communication device according to either of Claims 12 and 13 to execute the steps of the control method according to any one of Claims 1 to 11.

15. System comprising at least a radiofrequency beacon (BEA) and a communication device (TER) according to either of Claims 12 and 13.

16. System according to Claim 15, furthermore comprising, in order to implement the method according to Claim 11, at least:
- a content server (SER) connected to the radiofrequency beacon (BEA), and
- at least one lamp (LF) connected to the content server, configured to broadcast content data originating from the content server through optical communication,
wherein the beacon (BEA) is designed to detect the presence of a communication device located within an area of coverage of the beacon through radiofrequency communication and, based on this detection (BJR), to transmit at least one item of device presence information to the content server, causing the transmission of data to the device from the content server by way of the lamp through optical communication.
